**Europäisches Patentamt**

**European Patent Office**

**Office européen des brevets**

(19)

(11) Veröffentlichungsnummer : **0 179 247 B1**

(12) **EUROPÄISCHE PATENTSCHRIFT**

(45) Veröffentlichungstag der Patentschrift :
26.04.89

(21) Anmeldenummer : 85111422.3

(22) Anmeldetag : 10.09.85

(51) Int. Cl.⁴ : **H 04 N 1/06, H 04 N 1/028**

(54) **Vorrichtung zur Umsetzung der von einer Speicherschicht getragenen Strahlenbildinformationen in eine Fernsehsignalfolge.**

(30) Priorität : 26.09.84 DE 3435315

(43) Veröffentlichungstag der Anmeldung :
30.04.86 Patentblatt 86/18

(45) Bekanntmachung des Hinweises auf die Patenterteilung : 26.04.89 Patentblatt 89/17

(84) Benannte Vertragsstaaten :
DE FR IT

(56) Entgegenhaltungen :
EP--A-- 0 098 574
DE--A-- 2 044 606
DE--A-- 2 263 209
DE--C-- 579 826
US--A-- 3 859 527

(73) Patentinhaber : **Siemens Aktiengesellschaft Berlin und München**
**Wittelsbacherplatz 2**
**D-8000 München 2 (DE)**

(72) Erfinder : **Conrad, Bernhard**
**Rosenau 19**
**D-8520 Erlangen (DE)**
Erfinder : **Tressl, Günther**
**Dompfaffstrasse 12**
**D-8526 Bubenreuth (DE)**

Jouve, 18, rue St-Denis, 75001 Paris, France

**Beschreibung**

Die Erfindung betrifft eine Vorrichtung zur Umsetzung der von einer Speicherschicht getragenen Strahlenbildinformationen in eine Fernsehsignalfolge nach dem Oberbegriff des Patentanspruches 1. Derartige Vorrichtungen sind beispielsweise aus der US-A-3 859 527 bekannt.

Bei der Aufnahme von Strahlungsbildern, etwa Röntgenbildern, werden bekanntlich außer fotografisch wirksamen Schichten auch solche verwendet, bei welchen die Bildinformationen als elektrische Ladungsverteilung an einer Fotohalbleiterschicht oder als angeregte Stellen eines Phosphoreszenzstoffes gespeichert werden. Eine Fernsehsignalfolge wird daraus erhalten, indem die mit den Bildinformationen versehene Schicht mittels eines fokussierten Lichtstrahls zeilenweise abgetastet wird. Das erstgenannte Verfahren ist in der Zeitschrift « Journal of Applied Photographic Engineering », Vol. 4, Seiten 178-182, (1978), und das zweitgenannte in der US-A-4 346 295 bzw. in obengenannter US-PS beschrieben. Eine Beschreibung hinsichtlich von Röntgenbildern ist in dem Septemberheft von 1983 der Zeitschrift « Radialogy » auf den Seiten 833 bis 838 enthalten.

Etwa bei der Aufnahme von Röntgenbildern in Schichten, die als aufnehmendes Mittel einen Speicherleuchtstoff, d. h. einen Phosphoreszenzstoff, enthalten, wird ein Teil des durch die Röntgenstrahlen erzeugten Lichtes gespeichert. Bei einem Format von z. B. 400 × 400 mm, wie es üblicherweise zur Röntgendiagnostik der Lunge verwendet wird, kommt die Speicherplatte nach erfolgter Bestrahlung mit Röntgenstrahlen in ein Auslesegerät. Dort wird mittels eines fokussierten Lichtstrahles, beispielsweise eines Strahles eines Helium-Neon-Lasers mit einer Wellenlänge von 630 nm, die Speicherplatte zeilenförmig abtastet. Bei Verwendung von mit Europium (Eu) aktiviertem Bariumfluorchloridbromid (BaF(ClBr) : Eu) als Speichermittel führt dies zur Aussendung von Licht mit dem Schwerpunkt der Wellenlänge bei 390 nm. Das bei diesem Auslesen erzeugte Licht wird dann über ein Lichtleitersystem einem Fotomultiplier zugeführt, in welchem die Fernsehsignalfolge entsteht.

Bei Geräten der bekannten Art ist es problematisch, daß die Wahrscheinlichkeit für die Stimulierung des gespeicherten Lichtes durch den Laserstrahl sehr gering ist. Eine für praktische Anwendungen vernünftige Auslesezeit ist nur möglich, wenn nur ein kleiner Teil des gespeicherten Lichtes ausgelesen wird, weil dann der Laserstrahl sich nur kurze Zeit auf einem Bildpunkt (Pixel) befinden muß. Es muß jedoch trotzdem so viel Licht ausgelesen werden, daß die Zahl der in der Fotokathode des Fotomultipliers ausgelösten Elektronen genügend groß ist, z. B. 10 Elektronen pro absorbiertem Röntgenquant. So werden die statistischen Schwankungen gering und bleiben ohne schädlichen Einfluß auf das primäre Rauschen der absorbierten Röntgenquanten. Würde ein großer Teil des gespeicherten Lichtes ausgelesen werden, so wird im Zentrum des Fokus des Laserstrahles der größte Teil des gespeicherten Lichtes ausgelesen ; dort nimmt daher die Intensität dieses stimulierten Lichtes ab, in der weiteren Umgebung jedoch viel weniger (gestreute Laserstrahlung). Dies wäre schädlich, weil durch dieses « Zerfließen » sich die räumliche Auflösung verschlechtern würde.

Somit kann nur ein kleiner Teil des gespeicherten Lichtes ausgelesen werden und die Intensität des stimulierten Lichtes nimmt während der Zeit, in der der Laser sich auf einem Pixel befindet, nur wenig ab. Dies ergibt, daß die gesamte, pro Pixel stimulierte Lichtmenge angenähert proportional zur Auslesezeit ist. Die erforderliche Auslesezeit ist wiederum umgekehrt proportional zur prozentualen Lichtüberführung von der Speicherleuchtschicht zum Fotomultiplier, um eine ausreichende Zahl von Fotoelektronen in der Fotokathode zu erzeugen (Betrachtung als schrittweise Auslesung, in Wirklichkeit kontinuierlich). Minimale Auslesezeit erfordert somit maximale Lichtüberführung durch das Lichtleitsystem.

Bei einem bekannten Gerät wird die ebene Fläche einer Aufnahmeplatte, die mit Speicherleuchtstoff belegt ist und eine Röntgenaufnahme enthält, mit einem Laserstrahl abgetastet. Das aus den abgetasteten Zeilen austretende stimulierte Licht wird dann mittels eines Lichtleiters auf einen Fotomultiplier überführt. Diese Überführung des Lichtes von einer Abtastzeile, die bei Röntgenaufnahmen, wie oben schon angedeutet, in der Regel etwa 400 mm lang sein sollte, auf einen Fotomultiplier, dessen Eingang in handelsüblicher Ausführung maximal 175 mm beträgt, wird durch flexible Lichtleiter etc. erreicht. Für das Spektrum des Leuchtstoffes sind UV-Lichtleiter vorteilhaft, weil sich das Spektrum des Leuchtstoffes (Spektrum des stimulierten Lichtes) bis 350 nm herab erstreckt. Aus den Daten für bekannte Lichtleiter dieser Art läßt sich dann eine Lichtüberführung von maximal 5 % des im Leuchtstoff ausgelösten Lichtes auf den Multiplier abschätzen. Der geringe Prozentsatz ist darauf zurückzuführen, daß solche Lichtleiter aus ummantelten Quarzglasfäden bestehen. Quarzglas hat aber einen niedrigen Brechungsindex und der Unterschied des Brechungsindex des Kerns des Leiters von demjenigen seines Mantels ist daher gering. Damit kann ein solcher Leiter Licht übertragen, das im Einfallswinkel auf die Oberfläche der Lichtleitfasern nur wenig von der Senkrechten abweicht (geringe numerische Apertur).

Nach der US-A 4 346 295 wird ein massiver Lichtleiter ohne Mantel benutzt. Auch mit ihm kann keine höhere Lichtüberführung erreicht werden, weil er aus Kunststoff besteht, z. B. Acrylglas ; durch das Fehlen eines Mantels (hier = Luft) hat man einen großen Brechungsindex-Unterschied, die numerische Apertur ist also groß, jedoch ist wegen der erforderlichen großen Länge die spektrale Transmission gering. Ein solcher Lichtleiter aus Quarzglas wäre sehr kostspielig. Die große Länge ergibt sich daraus, daß bei der Lichtüberführung von der 400 mm langen Zeile auf einen Fotomultiplier mit wesentlich geringerem Durchmesser eine allmähliche Querschnittswandlung erforderlich ist (sogenannte adiabatische Lichtüberführung).

Eine abweichende Ausbildung ergibt sich nach US-PS 3 859 527, nach welcher die Speicherfolie auf eine rotierende Trommel aufgespannt wird. Die Abtastung wird dann bei drehender Trommel mittels eines radial darauf gerichteten Lichtstrahls unter axialem Vorschub vorgenommen. Dann ist eine nahezu vollständige Lichtüberführung vom Punkt der Lichtaussendung zum Fotomultiplier möglich, weil der Fokus des Laserstrahls auf der Speicherleuchtschicht relativ zum Fotomultiplier ruht und daher ein kurzer, etwa aus Quarzglas bestehender Lichtleiter verwendet werden kann. Ein Nachteil ist dabei, daß die wegen der Unwucht aufgespannter Speicherfolien mit naturgemäß immer etwas unterschiedlicher Leuchtstoffbelegung maximal mögliche Umdrehungsgeschwindigkeit der Trommel die Geschwindigkeit der Auslesung begrenzt. Auch bei jeweiliger Auswuchtung würde bei zu hohen Umdrehungsgeschwindigkeiten die Speicherfolie durch die Fliehkraft abgerissen.

In der DE-A 2 263 209 ist ein Bildübertragungs- und Aufzeichnungsgerät beschrieben, bei dem eine bogenförmig gekrümmte Vorlage abgetastet wird. Hierzu sind gekrümmte, stabförmige Lichtleiter vorgesehen, die in einer rotierenden Abtastvorrichtung derart befestigt sind, daß ein Teil des Lichtleiters axial durch die hohle Drehachse der Abtastvorrichtung geführt und ein weiterer Teil des Lichtleiters radial von der Drehachse aus auf die Vorlage gerichtet ist. In dem axialen Teil des Lichtleiters wird das Licht einer Strahlenquelle eingekoppelt, das aus dem radialen Teil austritt und auf die abzutastende Vorlage fällt. Das von der Vorlage reflektierte Licht wird durch einen zweiten, parallel zum ersten Lichtleiter angeordneten Lichtleiter erfaßt und auf den neben der Lichtquelle angeordneten Detektor geführt. Durch diese Vorrichtung ist eine sichere Halterung der Vorlage nicht gewährleistet. Auch müssen große Massen gedreht werden, da die gesamte rotierende Abtastvorrichtung bis an die Vorlage heranreicht. Auch ist die Trennung des Abtastlichtes von dem reflektierten Licht schwierig, da die Lichtquelle und der Detektor nebeneinander angeordnet sind.

Der Erfindung liegt die Aufgabe zugrunde, eine Vorrichtung der eingangs genannten Art zu schaffen, die einen einfachen Aufbau mit wenig bewegten Teilen aufweist und mit der eine schnelle und genaue Umsetzung der von einer Speicherschicht getragenen Strahlenbildinformationen in eine Fernsehsignalfolge ermöglicht wird.

Diese Aufgabe wird erfindungsgemäß durch die im kennzeichnenden Teil des Patentanspruches 1 angegebenen Maßnahmen gelöst. Die in den Unteransprüchen angegebenen Vorrichtungen stellen vorteilhafte Weiterbildungen der Erfindung dar.

Durch die erfindungsgemäße Anordnung der die Speicherschicht tragenden Speicherfolie an der Innwand einer Trommel zur Halterung kann die bei den bekannten Anordnungen notwendige Auslesezeit von 100 sec bei einer Fläche von 400 × 400 mm und 10 Abtastzeilen pro mm verringert werden. Da nicht die Trommel mit dem Leuchtstoff, sondern nur ein kleiner Motor mit dem Umlenkspiegel für den Abtaststrahl gedreht wird, kann die bei bekannten Einrichtungen mögliche Umdrehungsgeschwindigkeit von 2400 Umdrehungen pro Minute ohne Schaden um etwa eine Größenordnung erhöht, d. h. ungefähr verzehnfacht, werden.

Andererseits ist bei Verwendung von Speicherschichten, bei welchen die Speicherung mittels eines Phosphoreszenzleuchtstoffes erfolgt, eine günstigere Lichtüberführung vom Leuchtstoff auf den Fotomultiplier möglich.

Als Lichtleiter kann eine runde Platte verwendet werden, die aus transparentem Material, wie Acrylglas oder Quarzglas, besteht. Sie wird so angeordnet, daß ihre seitlichen Ränder der Speicherfolie zugewandt sind und daß sie mit einer ihrer großen Flächen dem Fotomultiplier anliegt. So kann über 40 % des stimulierten Lichtes der Speicherfolie auf die Fotokathode des Fotomultipliers überführt werden.

Es ist aber auch möglich, den Abtaststrahl mit dem Umlenkspiegel direkt auf die Speicherfolie zu leiten, etwa durch Lagerung des Drehspiegels vor dem Zentrum der lichtleitenden Platte. Der Spiegel braucht dann nur so geneigt zu sein, daß der Abtaststrahl die Speicherfläche an der Seitenkante der Platte vorbei erreicht. So wird eine Auslesung des gespeicherten Bildsignals in der Nähe der Seitenwand der lichtleitenden Platte erhalten, wie bei der Ausführung mit der Leitung des Abtaststrahls durch die Platte hindurch.

Ein entlang der Abtastbahn der Speicherfolie verlaufender Eingang eines Lichtleiters kann auch mittels eines entsprechend geneigten Spiegelringes erhalten werden. Es muß nur dafür gesorgt werden, daß das gespiegelte Licht auf die Fotokathode des Fotomultipliers gelangt. Ein sicherer Übertragungsweg wird durch Zwischenschaltung eines Lichtleiters erhalten. Zweckmäßig weist dieser Leiter die Form eines Zylinders auf, dessen eines Ende mit dem Spiegelring verbunden ist und dessen anderes Ende an der Fotokathode des Fotomultipliers mündet.

Bei Verwendung einer lichtdurchlässigen Trommel als Halterung der Speicherfolie kann ein solcher Lichtleiter Signale sowohl an der Innenseite als auch an der Außenseite der Abtastfläche ableiten. So kann von beiden Flächen Licht zum Fotomultiplier gebracht werden. Der außen angeordnete Lichtleiter kann auch zur Aufnahme von Bildsignalen aus einem Röntgenfilm benutzt werden, d. h. er kann zur Aufnahme von Signalfolgen aus durchstrahlbaren Bildern benutzt werden.

Die erforderliche Abtastung entlang einer Spiralbahn ist durch einen Vorschub der Trommel bzw. des Spiegels und des Lichtleiters, d. h. der lichtleitenden Platte bzw. eines lichtleitenden Zylinders, erreichbar.

Bei gleichen Voraussetzungen kann bei der erfindungsgemäßen Ausführung gegenüber den bekannten Vorrichtungen eine um den Faktor 10 verbesserte Überführung des an einer Speicherschicht ausgelösten Lichtes erreicht werden. Somit ist bei sonst unveränderten Bedingungen eine zehnfach höhere Auslesegeschwindigkeit möglich. Mit einer erfindungsgemäßen Anordnung ist damit eine Auslesezeit von 10 sec erreichbar. Sie liegt dann in der bei üblichen Röntgenfilm-Entwicklungsmaschinen erforderlichen Verarbeitungszeit. Die Überführung des Lichtes einer Speicherzeile von 400 mm Länge auf eine Fotokathode mit einem Durchmesser von beispielsweise 125 mm erfordert bei bekannten Ausleuchtevorrichtungen lange Lichtwege. Als günstig hat sich daher die lichtleitende Platte mit seitlicher Ankopplung erwiesen. Die Zeile von 400 mm Länge ist dann bezüglich des Fotomultipliers « aufgewickelt », so daß kurze Lichtwege, d. h. hohe Effizienz und kompakter Aufbau, erreicht werden (kleiner, flacher Lichtleiter). Durch die Erfindung wird also ein wirtschaftlich vertretbarer Einsatz von Speicherleuchtstoffen in der Röntgendiagnostik ermöglicht.

Die Erfindung ist nachfolgend anhand von in der Zeichnung dargestellten Ausführungsbeispielen näher erläutert. Es zeigen :

FIG 1 ein Blockschaltbild einer erfindungsgemäßen Vorrichtung zur Umsetzung von Strahlenbildinformationen in eine Fernsehsignalfolge,

FIG 2 ein aufgebrochener Ausschnitt der erfindungsgemäßen Vorrichtung,

FIG 3 und 4 zum Teil in Querschnitt die Führung des Abtaststrahles zur Speicherfolie,

FIG 5 den Strahlengang der ausgelösten Lichtstrahlen in der lichtleitenden Platte,

FIG 6 eine perspektivische Darstellung der Trommel zur Halterung der Speicherfolie,

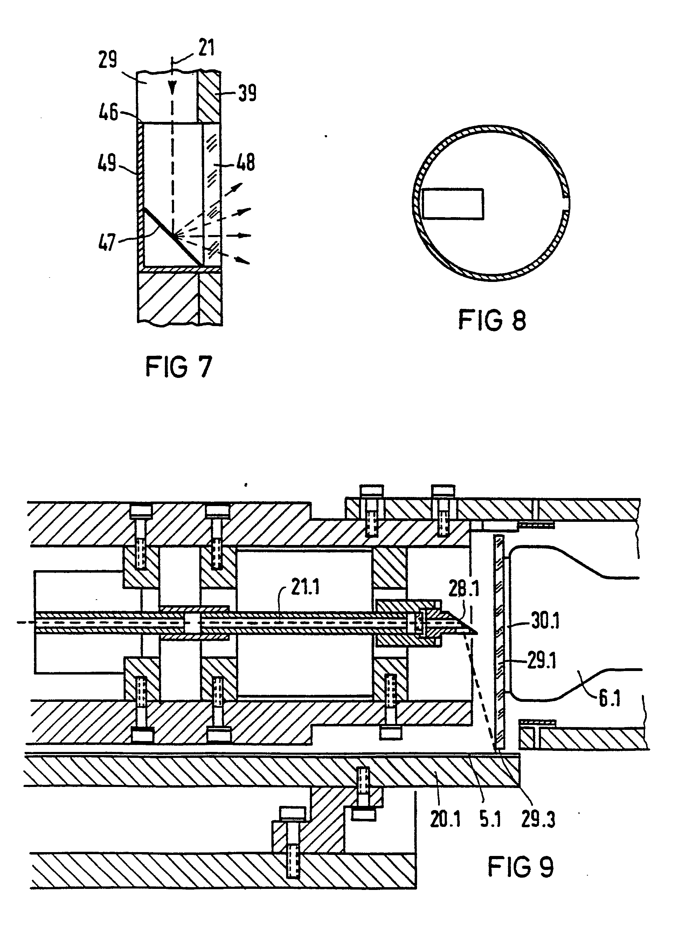

FIG 7 und 8 die Anordnung der Eichvorrichtung zur übereinstimmenden Auslesung der Bildsignale,

FIG 9 eine Anordnung, bei welcher der Abtaststrahl an der Platte vorbei direkt auf das gespeicherte Bild gerichtet ist,

FIG 10 eine hinsichtlich der Lage des Antriebs des Umlenkspiegels abgewandelte Anordnung,

FIG 11 eine Vorrichtung mit einem zylinderförmigen Lichtleiter,

FIG 12 und 13 abgewandelte Ausgestaltungen des zylinderförmigen Lichtleiters,

FIG 14 eine Vorrichtung mit einem außerhalb und einem innerhalb angeordneten Lichtleiter mit Spiegelring und

FIG 15 eine vergrößerte Darstellung des Spiegelringes.

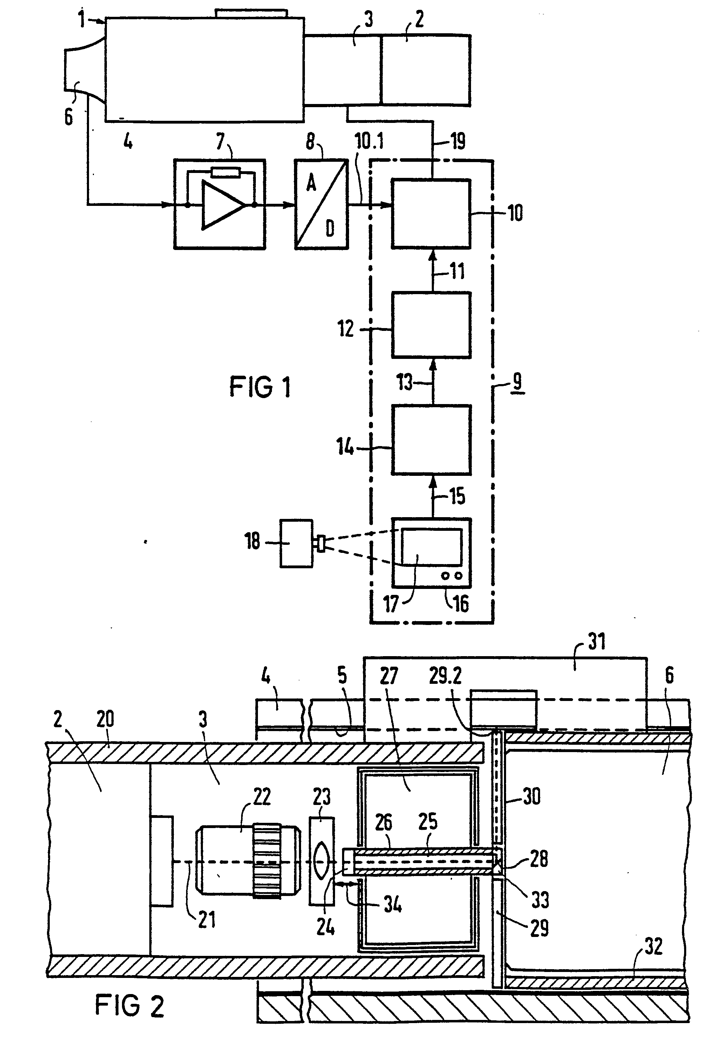

In der FIG 1 ist eine Vorrichtung 1 zur Umsetzung gespeicherter Bildsignale dargestellt, die aus einer Lichtquelle 2 besteht, die über eine Abtastvorrichtung 3 auf eine in einer Trommel 4 befestigte, als Speicherplatte dienende Speicherfolie 5 (FIG 2) geleitet wird. Das dort ausgelöste Licht gelangt dann auf einen Elektronenvervielfacher oder Fotomultiplier 6. Die vom Fotomultiplier 6 abgegebenen Signale gelangen über einen Verstärker 7, einen Analog-Digital-Wandler 8 in eine Bildverarbeitungseinrichtung 9, die am Eingang der Leitung 10.1 vom Analog-Digital-Wandler 8 einen Mikroprozessor 10 aufweist. Dieser ist über eine Leitung 11 mit einem Speicher 12 verbunden, der seinserseits eine Leitung 13 zu einem Rechner 14 aufweist. Von diesem Rechner 14 gelangen die Bildsignale über eine Leitung 15 auf einen Fernsehmonitor 16 und erzeugen auf dessen Bildschirm 17 ein sichtbares Bild, welches betrachtet oder mit einer Kamera 18 fixiert werden kann. Zur Synchronisation der Abtastung der Speicherschicht der Speicherfolie 5 besteht noch eine Verbindung 19 zwischen dem Mikroprozessor 10 und der Abtastvorrichtung 3.

Als Lichtquelle 2 kann ein 30 mW Helium-Neon-(He-Ne) Laser verwendet werden. Er befindet sich in einem Halterungsrohr 20 und gibt einen als gestrichelte Linie gezeichneten Abtaststrahl 21 an ein Aufweitsystem 22 ab, welches den Abtaststrahl 21 von 1 mm Durchmesser auf 4 mm aufweitet. Anschließend gelangt der Abtaststrahl 21 in eine Fokussiervorrichtung 23, welche den Abtaststrahl 21 auf die abzutastende Oberfläche der Speicherfolie 5 fokussiert. Der Abtaststrahl 21 gelangt dann durch eine als Astigmatismus-Korrektur wirkende Zylinderlinse 24. Von dieser aus gelangt der Abtaststrahl 21 durch eine Aushöhlung 25 der Welle 26 eines Motors 27 hindurch auf einen Umlenkspiegel 28 und anschließend in eine lichtleitende Platte 29. Aus der seitlichen Wand 29.2 der Platte 29 fällt der Abtaststrahl 21 auf die abzutastende Oberfläche der Speicherfolie 5.

Von dort gelangt durch den Abtaststrahl 21 stimuliertes Licht wieder über die seitliche Wand 29.2 der lichtleitenden Platte 29 zum Eingangsfenster 30 des Fotomultipliers 6. Die Platte 29 stellt einen kompakten Lichtleiter dar, bei dem die in einem aus Fasern zusammengesetzten Lichtleiter zwischen den Fasern vorhandenen Lücken aufgefüllt sind, so daß er demgegenüber gesteigerte Effektivität aufweist. Der Fotomultiplier 6 ist über ein Halterungsrohr 32 und einen Bügel 31 mit dem Halterungsrohr 20 der Lichtquelle 2 fest verbunden, so daß eine stabile Zuordnung gegeben ist und eine Längsverschiebung der Trommel 4 möglich wird.

Der Abtaststrahl 21 wird durch das Aufweitsystem 22 mittels eines nicht gesondert dargestellten Raumfilters von einem Durchmesser von 1 mm auf 4 mm aufgeweitet. Anschließend wird der Strahl 21 in der Fokussiervorrichtung 23 fokussiert, so daß er beim Auftreffen auf die Oberfläche der Speicherfolie 5 einen Durchmesser von 30 μm hat. Der Abtaststrahl 21 geht durch die Aushöhlung 25 in der Welle 26 des Motors 27 (oder Turbine) hindurch. Der Motor 27 ist mit einem Koordinatengeber (Winkelkodierer) gekoppelt, der für die Bildauslesung den Ort (Pixel-Nummer) innerhalb der Zeile angibt. Dazu ist die Synchronisierleitung vom Mikroprozessor 10 zur Abtastvorrichtung 3 vorhanden. Der Umlenkspiegel 28 ist in einem Glaszylinder 33 eingebettet, der auf die verlängerte Welle 26 des Motors 27 geklebt ist. Der Glaszylinder 33 hat fast die Größe des für die Umlenkung des Abtaststrahls 21 in der Platte 29 vorgesehenen Loches. In erster Näherung wird daher ein Astigmatismus des Strahlenganges des Abtaststrahls 21 vermieden. Der durch den Luftspalt verbleibende Rest Astigmatismus wird durch eine schwachbrechende Zylinderlinse 24 korrigiert. Diese Zylinderlinse 24 befindet sich an der Eintrittsseite des Abtaststrahls 21 in die Aushöhlung 25 der Welle 26 des Motors 27. Gegebenenfalls kann diese Feinkorrektur auch, wie durch den Doppelpfeil 34 angedeutet, verschiebbar gestaltet sein.

Da der Abtaststrahl 21 nicht genau in der Mitte der lichtleitenden Platte 29 austreten muß (bei 5 mm Dicke etwa ± 1,5 mm Mittenabweichung erlaubt), braucht der Umlenksspiegel 28 nicht genau justiert zu werden. Es genügt, zwei abgeschrägte Rohlinge zu verkitten, wobei die abgeschrägte Fläche des einen vorher poliert, verspiegelt und mit einer Schutzschicht versehen wurde. Anschließend wird der so hergestellte Rohling feinbearbeitet. Der Astigmatismus entsteht durch den Luftspalt, da die Zylinderkrümmung des Loches und des Umlenkspiegel 28 aufweisenden Glaszylinders 33 etwas unterschiedlich ist. Alternativ kann ein Lichtleitstab in beliebiger Halterung verwendet werden, dessen Austrittseite genau die Krümmung des Loches hat, dann ist eine zusätzliche Korrektur überflüssig.

Tatsächlich hat man auch dann noch einen sehr geringfügigen Astigmatismus, der aber nicht stört, da es genügt, den Laser auf dem Leuchtstoff auf einen Fleck von 50 μm Durchmesser zu fokussieren.

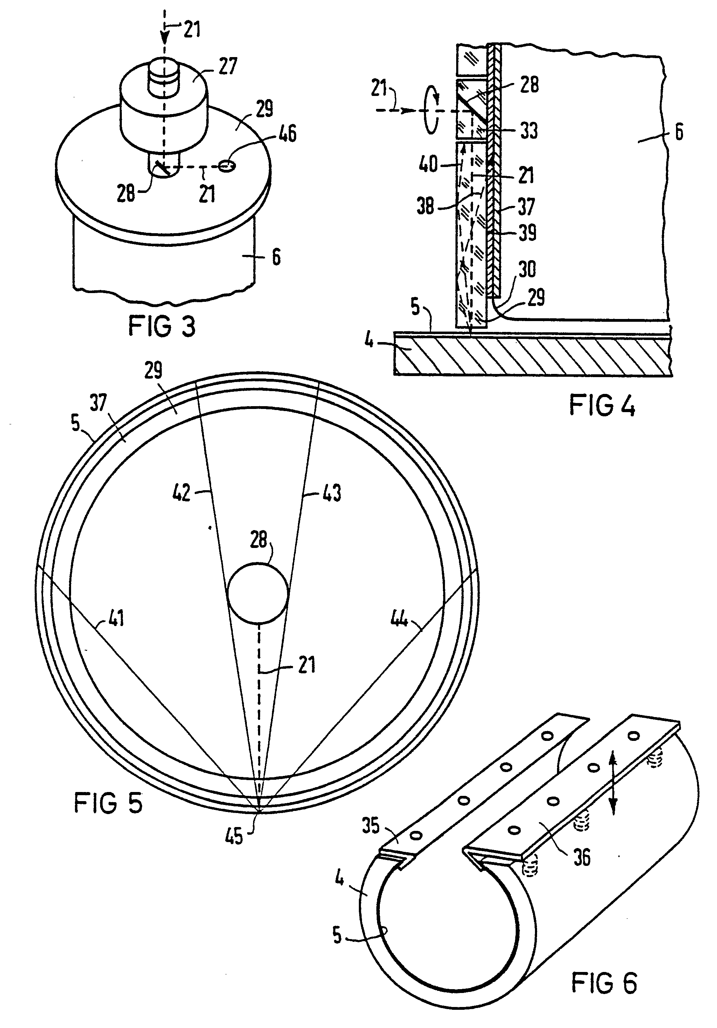

Die lichtleitende Platte 29 besteht vorzugsweise aus Quarzglas, weil durch dieses das an der Folie 5 ausgelöste Licht besonders gut geleitet wird. Der Abstand der Mantelfläche der Platte 29 von der Oberfläche der Folie 5 beträgt 0,5 mm. Die Platte 29 weist an ihrer äußeren Begrenzung Aussparungen für die Halterungswinkel 35 und 36 (FIG 6) der Trommel 4 auf.

Bei hinreichend kleinem Abstand der seitlichen Wand 29.2 der Platte 29 von der Oberfläche der Folie 5 tritt etwa 90 % des in der Folie ausgelösten Lichtes in die Platte 29 ein. Dort wird das Licht durch Totalreflexion vollständig weitergeleitet (Brechungsindex gegenüber Luft größer als 1,42 wie bei Plexiglas oder Quarzglas). Der fehlender Rest von 10 % ergibt sich durch Reflexionsverluste an der Oberfläche der Platte 29. Normalerweise wird das Licht durch einen Lichtleiter an seinem Ende auf den Lichtempfänger, etwa einen Fotomultiplier, überführt. Die erfindungsgemäße seitliche Ankopplung der Platte 29 an den Fotomultiplier 6 bewirkt jedoch, daß die Totalreflexion auf der ihm zugewandten Seite bei annähender Übereinstimmung des Brechungsindices der aneinandergrenzenden Teile aufgehoben ist. So erreicht das Licht, welches an der Folie 5 ausgelöst wird, auf sehr kurzen Wegen den im Eingangsfenster 30 des Fotomultipliers 6 liegenden Empfänger, d. h. die Fotokathode 37 des Fotomultipliers 6.

In der FIG 4 ist der Lichtweg des Abtaststrahles 21 durch die Platte 29 dargestellt. Der Abtaststrahl 21 löst an der Folie 5 Licht aus, das dann etwa über den Strahlengang 38 in die Fotokathode 37 des Fotomultipliers 6 gelangt. Dabei durchquert der Strahl ein Filter 39, welches dazu dient, gestreutes Licht des Abtaststrahls 21 davon abzuhalten, in die Fotokathode 37 zu gelangen. Der Strahl 40 zeigt den Strahlengang an, der bei ungünstigen Verhältnissen zum Verlust von Licht führt.

In der FIG 5 ist eine Draufsicht auf die Platte 29 gezeichnet. Dabei zeigt sich, daß sich die Lichtwege, wie etwa durch Strahlen 41 bis 44 angedeutet, von einem Auslösepunkt 45 aus über weite Strecken über die Fotokathode 37 ausdehnen können, so daß eine sehr effektive Lichtübertragung erfolgt. Dabei ergibt sich symmetrisch zu beiden Seiten des auslösenden Abtaststrahls 21 eine maximale Lichtausbreitung von 42°, in der das Licht bei streifendem Einfall in den Lichtleiter gebrochen wird (bei einem Brechungsindex von n = 1,5 des Lichtleiters).

Bei einem Durchmesser der Platte 29 von 144 mm und einer Dicke von 5 mm bei einem zentralen Loch von 20 mm Durchmesser für den Umlenkspiegel 28 und einer Fotokathode 37 des Fotomultipliers 6 von 125 mm Durchmesser wird über 95 % des in die Platte 29 eintretenden Lichtes auf die Fotokathode 37 des Fotomultipliers 6 überführt. Somit wird nach der Erfindung eine annähernd vollständige Überführung des vom Punkt 45 ausgehenden Lichtes auf die Fotokathode 37 von 125 mm Durchmesser in einer stabilen kompakten Anordnung auf kurzen Lichtwegen erreicht.

Zwischen der Platte 29 und dem Eingangsfenster 30 des Fotomultipliers 6 ist eine 2 mm dicke Platte aus Filterglas BG 3 gekittet, die als Filter 39 bewirkt, daß gestreutes Licht des Abtaststrahls 21 absorbiert wird. Bei der gewöhnlichen Ankopplung des Eingangsfensters 30 an die Platte 29 wird ein 3 mm dickes Filter 39 verwendet, das 70 % des an der Speicherfolie 5 ausgelösten stimulierten Lichtes von 390 nm durchläßt (bei Verwendung von BaFl (ClBr) als Speicherstoff). Das Abtastlicht von 630 nm wird aber bis auf weniger als den Bruchteil von $10^{-12}$ absorbiert. Bei der erfindungsgemäßen Anordnung sind die Lichtwege im Filter 39 für das Abtastlicht länger und variieren stärker. Es ergibt sich bei einer Dicke des Filters 39 von 2 mm eine Transmission von ca. 50 % des an der Speicherfolie 5 stimulierten Lichtes bei einer Durchlässigkeit für das Abtastlicht des Abtaststrahls 21, wie es oben schon angegeben ist. Die erfindungsgemäße Anordnung hat also nur 70 % der Lichtüberführung einer optimalen normalen Lichtleiter-Filter-Anordnung.

Für die Erstellung eines optimalen Bildes wichtige fortlaufende Eichung des Fotomultipliers 6 und der Intensität der Lichtquelle 2, bei denen Schwankungen im Zeitraum mehrerer Sekunden auftreten, befindet sich in der Lichtleitplatte eine Eichöffnung 46. Dort wird durch einen diffusen Reflektor 47 der Abtaststrahl 21 kurzzeitig auf die Fotokathode 37 gelenkt. Er erzeugt dort einen Eichimpuls. Durch ein Filter 48 aus Grauglas wird dabei die Intensität des Strahles 21 so herabgesetzt, daß der Impulsstrom in etwa dem maximalen Strom entspricht, der durch stimuliertes Licht von der Speicherfolie 5 her hervorgerufen werden kann. Die Eichöffnung 46 ist gegen Streulicht seitlich und auf der dem Fotomultiplier 6 abgewandten Seite durch einen Einsatz 49 abgeschirmt. Daher kann kein gestreutes Licht des Abtaststrahles 21 während der Auslesung auf den Reflektor 47 der Eichvorrichtung kommen. Über die verbleibende Öffnung kann bei Auslesung der gegenüberliegenden Seite kein Licht zum Relektor kommen, da dieser Weg durch den Umlenkspiegel 28 versperrt ist.

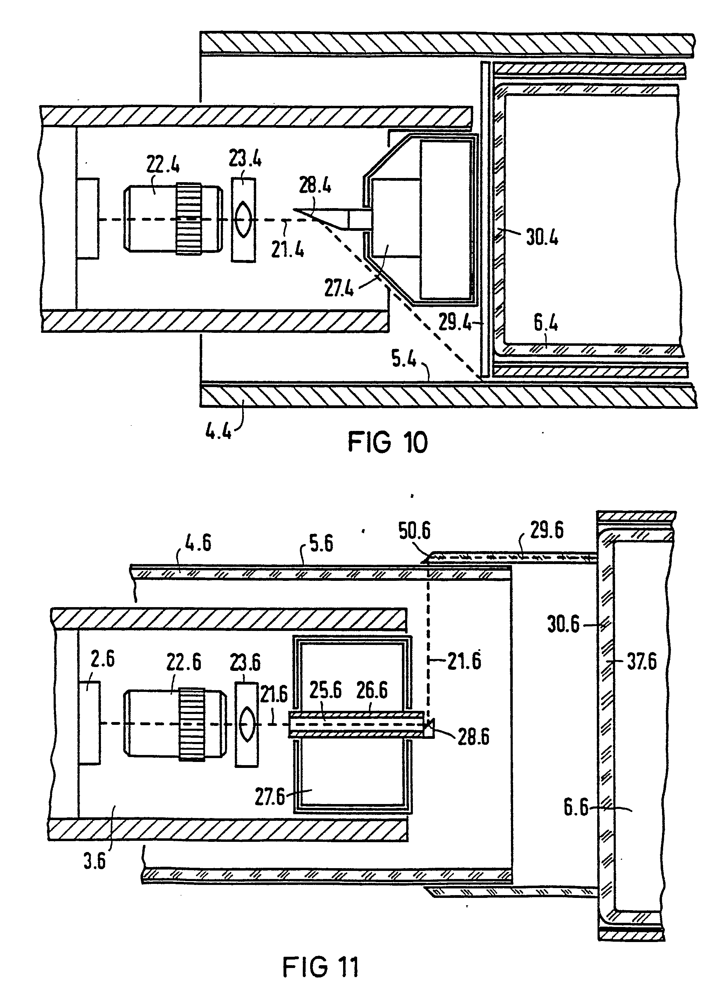

In der FIG 9 ist eine einfache Ausführungsform der lichtleitenden Platte 29.1 dargestellt. Die dabei mit FIG 2 übereinstimmenden Teile sind durch Anfügung der Ziffer .1 kenntlich gemacht. Der Abtaststrahl 21.1 des Lasers wird über einen Umlenkspiegel 28.1 so geführt, daß er außerhalb der Platte 29.1 verläuft und ganz dicht an der äußeren Kante 29.3 der Platte vorbei auf den Leuchtstoff der Speicherfolie 5.1 geführt wird. Durch einen Winkel von etwa 10 bis 20° zwischen dem seitlich abgelenkten Strahl 21.1 und seiner in der Anordnung nach FIG 2 gewählten Ablenkung um 90° erreicht man, daß trotz Justiertoleranzen der Fokus im Leuchtstoff der Speicherfolie 5.1 sich zumindest nicht vor der lichtleitenden Platte 29.1 befindet. Damit wird zumindest alles Licht im Halbraum hinter der Senkrechten in die Platte 29.1 aufgenommen. Bei einer Dicke der lichtleitenden Platte 29.1 von 5 mm ist hierbei ein Abstand von 1 bis 2 mm von ihrer seitlichen Begrenzung zu empfehlen, damit die Justierung nicht zu kritisch wird. Bei dieser Ausführung braucht die Platte 29.1 in allen Oberflächen nur gut poliert und im Material nicht von optischer Qualität zu sein. Sie kann z. B. aus Quarzglas hergestellt sein, das Schlieren enthält. Allerdings ist bei dieser Ausführung die Lichtausbeute geringer als bei den Anordnungen von FIG 1 bis 5, weil wegen der asymmetrischen Stellung der Platte 29.1 zum Lichtausgangspunkt etwa die Hälfte des in der Speicherfolie 5.1 ausgelösten Lichtes verloren geht.

Bei der abgewandelten Anordnung nach FIG 10 erfolgt die Drehung des Umlenkspiegels 28.4 mittels eines Motors 27.4, der dem Aufweitsystem 22.4 und der Fokussiereinrichtung 23.4 vorgelagert ist. Der Motor 27.4 kann in diesem Fall zwischen der Fokussiervorrichtung 23.4 und dem Fotomultiplier 6.4 gelagert werden, weil der Abtaststrahl 21.4 seitlich abgelenkt am Motor 27.4 vorbeigeführt werden kann.

In der FIG 11 ist eine Ausgestaltung der Erfindung dargestellt, mit welcher die auf einen Röntgenfilm 5.6 als Speicherfolie gespeicherten Informationen in eine Fernsehimpulsfolge übergeführt werden können. Dabei besteht die Trommel 4.6 zur Halterung aus Glas, d. h. aus durchsichtigem Material. Der Film kann auch ohne besondere Halterung zylinderförmig gespannt sind, wenn er eine hinreichende mechanische Stabilität aufweist. Das durch den Röntgenfilm 5.6 vom Abtaststrahl 21.6 hindurchfallende Licht gelangt auf eine schräge Spiegelfläche 50.6, die außen um den Röntgenfilm 5.6 herumgelegt ist, so daß sie einen Konusausschnitt bildet, der mit der Achse einen Winkel von 45° einschließt. An die Spiegelfläche 50.6 schließt sich ein rohrförmiger Lichtleiter, ein lichtleitender Zylinder 29.6, an, der aus Plexiglas besteht. Er führt zur Fotokathode 37.6 des Fotomultipliers 6.6. Der Zylinder 29.6 braucht keine optische Präzision aufzuweisen. Es genügt, wenn er gut polierte Flächen hat. Auch die Spiegelfläche 50.6 braucht nicht exakt eben zu sein, denn Licht, welches von der Achsrichtung des Zylinders 29.6 abweicht und auf seine Wandung trifft, wird durch Totalreflexion weiter auf die Fotokathode 37.6 des Fotomultipliers 6.6 geleitet. Dasselbe gilt in bezug auf die Divergenz des Lichtstrahlenbündels, je nach den Fokussierungsbedingungen und Beugungserscheinungen des Abtaststrahles 21.6 an Filmkörnern.

Die Spiegelfläche 50.6 kann durch eine diffus reflektierende Fläche ersetzt sein, etwa durch eine Auftragung aus Titandloxid ($TiO_2$), welches durch Epoxidharz gebunden ist. Eine solche Schicht bewirkt, daß über 50 % des auf den Reflektor fallenden Lichtes weitergeleitet werden. Ein Teil tritt wieder aus, weil der Grenzwinkel der Totalreflexion nicht erreicht wird. Weitere Verluste durch Totalreflexion, die an dem dem Fotomultiplier 6.6 zugewandten Ende des Lichtleiters 29.6 auftreten können, sind vermeidbar, indem man dieses Ende mit dem Eingangsfenster 30.6 des Fotomultipliers 6.6 verkittet. Durch diffuse Reflexionen breitet sich das Licht seitlich weit aus und leuchtet die Fotokathode 37.6 fast gleichmäßig aus. So werden Bildartefakte durch lokale Schäden (Kratzer, Staub etc.) des lichtleitenden Zylinders 29.6 und durch lokale Ungleichmäßigkeiten der Fotokathode 37.6 vermieden.

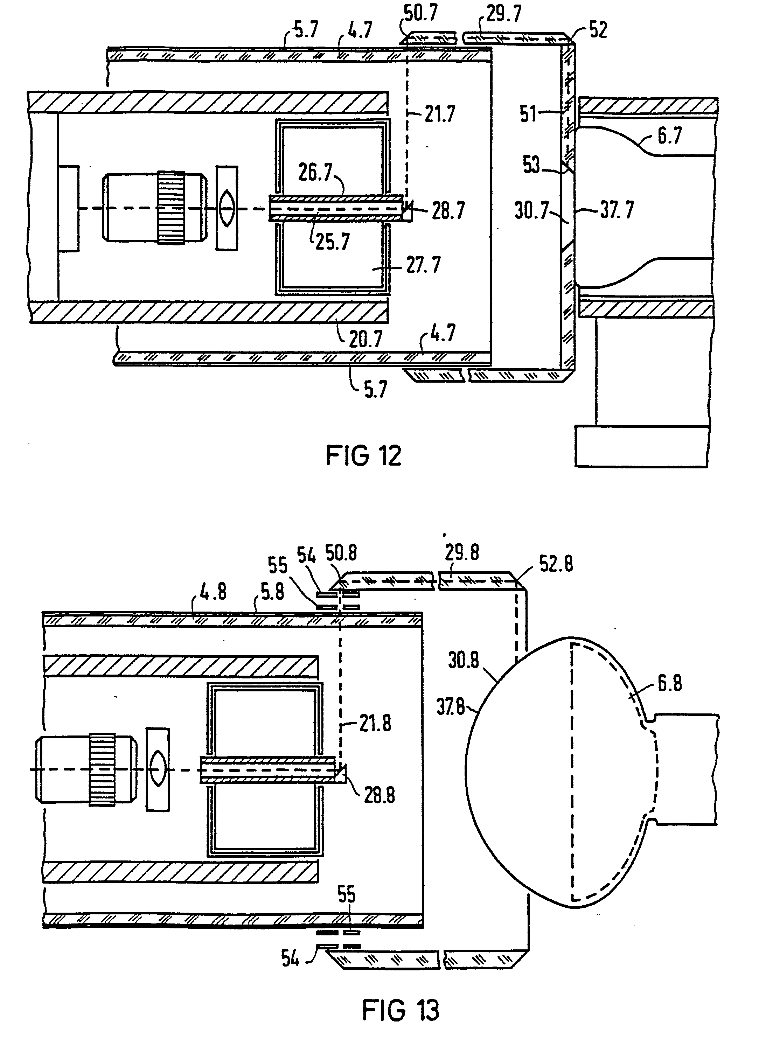

In der FIG 12 ist eine Anordnung gezeichnet, bei welcher ein kleiner Fotomultiplier 6.7 verwendet ist. Hier ist der Lichtleiter 29.7 durch eine Platte 51, die aus Plexiglas besteht, abgeschlossen. Das von der Speicherschicht der Speicherfolie 5.7 emittierende Licht wird im Lichtleiter, dem Zylinder 29.7, über drei konische Spiegelflächen 50.7, 52 und 53 auf die Fotokathode 37.7 des Fotomultipliers 6.7 geleitet.

Bei der Anordnung nach FIG 13 besitzt der Fotomultiplier 6.8 eine halbkugelförmige Fotokathode 37.8. Dies vereinfacht das Lichtleitersystem, indem nur zwei Spiegelflächen 50.8 und 52.8 und ein lichtleitender Zylinder 29.8 zur Überleitung des ausgelösten Lichtes benötigt werden. Ähnliche Anordnungen werden mit Fotomultipliern mit sogenannten Seitenkathoden erreicht, d. h. solchen Fotomultipliern, bei denen zwar ein ebenes Eingangsfenster vorhanden ist, bei denen aber die Kathode über das Eingangsfenster hinaus auch Teile der zylinderförmigen Seitenwand des Fotomultipliers belegt. Bei der Ausgestaltung nach FIG 13 sind außerdem zwischen der ersten Spiegelfläche 50.8 und der auszulösenden Speicherfolie 5.8 zwei Schlitzblenden 54 und 55 angeordnet. Diese bewirken, daß nur direkt durch die Speicherfolie 5.8 kommendes Licht in den Zylinder 29.8 gelangt. Streulicht wird dagegen weitestgehend ausgeblendet.

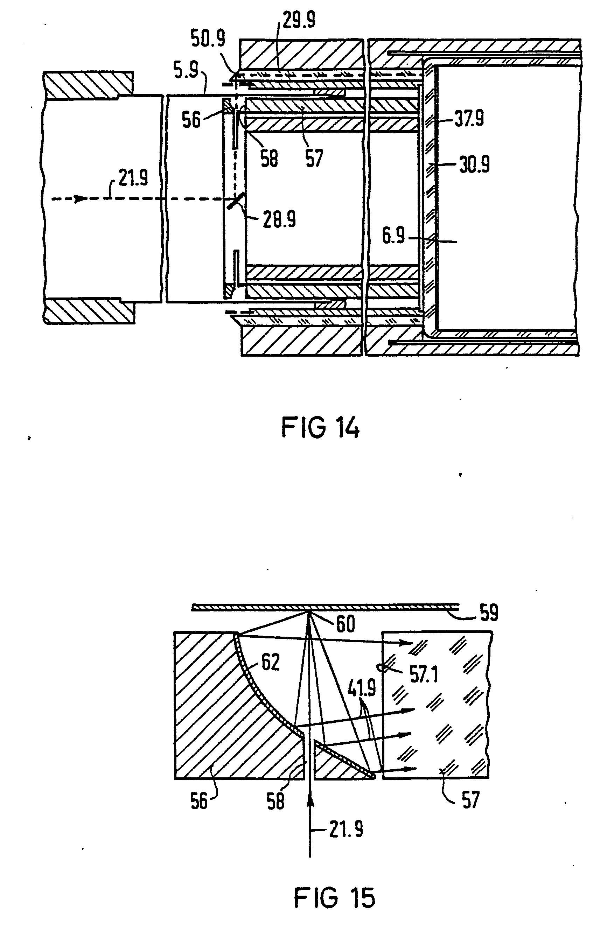

In der FIG 14 ist eine Anordnung dargestellt, bei welcher dem Auslesepunkt zwei Spiegel, die erste Spiegelfäche 50.9 und ein Spiegelring 56, zugeordnet sind. Dabei ist die Spiegelfläche 50.9 einem Zylinder 29.9 als Lichtleiter und der Spiegelring 56 einem Lichtleitzylinder 57 zugeordnet, die beide zum Eingangsfenster 30.9 des Fotomultipliers 6.9 führen. Durch die Verwendung der zwei Spiegel wird über 80 % des in der Speicherschicht 59 mittels des Abtaststrahles 21.9 ausgelösten Lichtes aufgefangen und zum Fotomultiplier 6.9 geleitet. Während die Anordnung der Spiegelfläche 50.9, wie bereits in FIG 12 dargestellt, um 45° geneigt ist, besitzt der Spiegelring 56 gebogene Form, die in der FIG 15 deutlicher zum Ausdruck kommt. Wegen der seitlichen Anordnung des Lichtleitzylinders 57 ist der streifende Auffall des ausgelösten Lichtes 41.9 auf die Eingangsfläche 57.1 des Lichtleitzylinders 57 zu vermeiden, damit hohe Verluste durch Reflexion verhindert werden. Der Lichtleitzylinder 57 besteht aus einem 10 mm starken Rohr aus Quarz, welches einen Abstand von der Speicherfolie 5.9 von 1,5 mm hat. Der Auftreffpunkt 60 des Abtaststrahles 21.9 liegt dann 5 mm von der Eingangsfläche 58 des Lichtleitzylinders 57 entfernt.

Durch die Hinzufügung der zweiten Spiegelfläche 50.9 mit dem Lichtleiter 29.9 kann bis auf geringfügige Reflexionsverluste (etwa 4 %) alles ausgelöste Licht auf den Fotomultiplier 6.9 übertragen werden, bis auf Verluste, die durch den zwischen den Spiegeln 50.9 und 56 verbleibenden Schlitz austreten.

Der Spiegel 56 besteht aus einem Ring aus durchsichtigem Material, wie Glas oder Plexiglas (oberflächenverspiegelt), der einen Durchtritt 58 für den Abtaststrahl 21.9 aufweist. An seiner der auszulesenden Fläche der Speicherschicht 59 zugewandten Seite ist die Oberfläche in der im Schnitt als ein Teil kreisbogenförmig, ein Teil eben erscheinenden Form angebildet. Die Form ist nicht sehr kritisch, da alles in den Lichtleiter fallende Licht geleitet wird. Die Reflexion wird durch eine reflektierende Fläche 62 erreicht, die in vorliegendem Beispiel ein Aluminium-Oberflächenspiegel bekannter Art sein kann.

Die Ausgestaltung nach FIG 14 mit den zwei lichtleitenden Zylindern 29.9 und 57 gestattet sowohl Auslesung von in einer Phosphoreszenzschicht gespeicherten Bildern als auch die Auslesung von Filmbildern im Durchlicht. Da die Intensität des durch einen Röntgenfilm hindurchtretenden Lichtes des Abtaststrahles 21.9 viel größer ist als das im Leuchtstoff einer Speicherfolie 5.9 stimulierbare Licht, ist es zweckmäßig, bei der Auslesung von Filmbildern den Abtaststrahl 21.9 schwächer zu machen. Dies kann durch ein Filter, beispielsweise aus Grauglas, erfolgen. Bei der einfacheren Anordnung eines Grauglasfilters im Strahlengang des Abtaststrahles 21.9 ist der Lichtleiter 29.9 bei der Auslesung von im Phosphoreszenzstoff einer Speicherfolie 5.9 gespeicherten Bildern durch einen Schieber abzudecken.

**Patentansprüche**

1. Vorrichtung zum Umsetzen der in einer Speicherschicht (5 bis 5.9) enthaltenen Bildinformationen in eine elektrische Signalfolge, mit einer an einer Trommel (4 bis 4.6) liegenden Fläche, der Mittel zur Befestigung der Speicherschicht (5 bis 5.9) zugeordnet sind, und einem auf diese Fläche gerichteten Abtaststrahl (21 bis 21.9) einer Lichtquelle (2, 2.6), wobei der Abtaststrahl (21 bis 21.9) und die Trommel (4 bis 4.6) im Sinne einer Zeilenabtastung und eines Zeilenwechsels einander gegenüber rotierbar und axial verschiebbar gelagert sind und die Abtastfläche durch einen Lichtleiter (29 bis 29.9, 57) mit einem fotoelektrischen Wandler (6 bis 6.9) in optischer Verbindung steht, dadurch gekennzeichnet, daß die Fläche an der Innenwand der Trommel (4 bis 4.6) liegt, daß der Abtaststrahl (21 bis 21.9) über einen im Zentrum der Trommel (4 bis 4.6) liegenden, rotierenden Umlenkspiegel (28 bis 28.9) geführt ist, und daß der Lichtleiter (29 bis 29.9, 57) drehfest angebracht und auf die Abtastfläche ausgerichtet ist, die der durch den Umlenkspiegel (28 bis 28.9) gegen die Innenseite der Trommel (4 bis 4.6) gerichtete Abtaststrahl (21 bis 21.9) beschreibt.

2. Vorrichtung nach Anspruch 1, dadurch gekennzeichnet, daß der Lichtleiter eine transparente Platte (29) ist, die mit einer ihrer großen Flächen am Strahleneingangsfenster (30) des Wandlers (6) liegt, mit ihrer Seitenfläche (29.2) bis auf den zur axialen Verschiebung erforderlichen Zwischenraum an die Abtastfläche heranreicht und in ihrem Zentrum eine Ausnehmung aufweist, in welcher der Umlenkspiegel (28) den Abtaststrahl durch die Platte (29) hindurch radial auf die Abtastfläche reflektierend und um die Achse der Trommel (4) rotierbar angeordnet ist.

3. Vorrichtung nach Anspruch 1, dadurch gekennzeichnet, daß der Lichtleiter eine sich über den Innenraum der Trommel (4.4) erstreckende lichtleitende Platte (29.1, 29.4) ist, wobei der Umlenkspiegel (28.1, 28.4) vor dieser Platte (29.1, 29.4) liegt und der Abtaststrahl (21.1, 21.4) schräg zur Fläche der Platte (29.1, 29.4) radial umgelenkt ist, so daß er an der äußeren Kante (29.3) der Platte (29.1, 29.4) vorbei in Nachbarschaft der seitlichen Wand (29.2) der Platte (29.1, 29.4) auf die Speicherschicht (5.1, 5.4) trifft.

4. Vorrichtung nach Anspruch 1, dadurch gekennzeichnet, daß der Lichtleiter die Form eines Zylinders (29.6 bis 29.9, 57) hat, der bis auf den eine Verschiebung gegeneinander zulassenden Abstand die abgedeckte, von der Speicherschicht (5.6 bis 5.9) freigelassene Innenseite der Trommel (4.6) überdeckt und dessen einer Rand eine um 45° nach innen geneigte schräge Spiegelfläche (50.6 bis 50.9) aufweist, während das andere Ende dem Strahleneingangsfenster (30.6 bis 30.9) des fotoelektrischen Wandlers (6.6 bis 6.9) anliegt.

5. Vorrichtung nach Anspruch 4, dadurch gekennzeichnet, daß die Trommel (4.6) wenigstens an dem Teil, an dem die Abtastfläche der Speicherschicht (5.6 bis 5.9) angeordnet ist, transparent ist und daß an der Außenfläche der Trommel (4.6) der mit dem Wandler (6.6 bis 6.9) verbundene lichtleitende Zylinder (29.6 bis 29.9) liegt.

6. Vorrichtung nach Anspruch 4 oder 5, dadurch gekennzeichnet, daß an der Innenfläche der Trommel in einem die Zwischenlage einer Speicherschicht (5.9) erlaubenden Abstand als Lichtleiter ein Lichtleitzylinder (57) vorgesehen ist.

7. Vorrichtung nach Anspruch 6, dadurch gekennzeichnet, daß der Lichtleitzylinder (57) an beiden Enden eben abgeschnitten ist und der Eingangsfläche (57.1) dieses Lichtleitzylinders (57) ein Spiegelring (56) vorgelagert ist, dessen reflektierende Fläche (62) im radialen Querschnitt die Form eines Kreisbogens aufweist oder eine Stück Kreisbogen und ein Stück eben ist, und die Lichtleitung im Lichtleitzylinder (57) begünstigt.

8. Vorrichtung nach einem der Ansprüche 2 bis 7, dadurch gekennzeichnet, daß der Lichtleiter (29 bis 29.9, 57) aus Quarz besteht und eine Wandstärke von 3 bis 10 mm, insbesondere 5 mm, hat.

## Claims

1. Arrangement for converting the image information contained in a storage layer (5 to 5.9) into an electrical signal sequence, having a surface which lies on a drum (4 to 4.6) and with which means are associated for the purpose of securing the storage layer (5 to 5.9), and having a scanning beam (21 to 21.9), directed at this surface, of a light source (2, 2.6), in which the scanning beam (21 to 21.9) and the drum (4 to 4.6) are mounted in respect of each other in a rotatable and axially displaceable manner for the purposes of a line scanning and a line change and the scan surface communicates optically, by means of a light guide (29 to 29.9, 57), with a photoelectric transducer (6 to 6.9), characterised in that the surface lies on the inner wall of the drum (4 to 4.6), in that the scanning beam (21 to 21.9) is guided by way of a rotating deviation mirror (28 to 28.9) which lies in the centre of the drum (4 to 4.6) and in that the light guide (29 to 29.9, 57) is provided in a manner secure against rotation and is aligned in relation to the scan surface which is described by the scanning beam (21 to 21.9) directed by means of the deviation mirror (28 to 28.9) towards the inside of the drum (4 to 4.6).

2. Arrangement according to claim 1, characterised in that the light guide is a transparent plate (29) which with one of its large surfaces lies at the beam entry window (30) of the transducer (6), with its side surface (29.2) reaches, but for the interspace required for the axial displacement, the scan surface and has in its centre a recess in which the deviation mirror (28) is arranged such that it reflects the scanning beam through the plate (29) radially onto the scan surface and is rotatable about the axis of the drum (4).

3. Arrangement according to claim 1, characterised in that the light guide is a light-guiding plate (29.1. 29.4) which extends over the interior space of the drum (4.4), the deviation mirror (28.1, 28.4) lying in front of this plate (29.1, 29.4) and the scanning beam (21.1, 21.4) being deviated radially, obliquely in relation to the surface of the plate (29.1, 29.4), so that it meets with the storage layer (5.1, 5.4), passing the outer edge (29.3) of the plate (29.1, 29.4) in the vicinity of the lateral wall (29.2) of the plate (29.1, 29.4).

4. Arrangement according to claim 1, characterised in that the light guide has the form of a cylinder (29.6 to 29.9, 57) which, with the exception of the space permitting a mutual displacement, overlaps the covered inside of the drum (4.6) left free by the storage layer (5.6 to 5.9) and the one edge of which has an oblique mirror surface (50.6 to 50.9) which is inclined inwards by 45°, whilst the other end rests against the beam entry window (30.6 to 30.9) of the photoelectric transducer (6.6 to 6.9).

5. Arrangement according to claim 4, characterised in that the drum (4.6) is transparent at least at the part at which the scan surface of the storage layer (5.6 to 5.9) is arranged and in that the light-guiding cylinder (29.6 to 29.9) connected with the transducer (6.6 to 6.9) lies on the outer surface of the drum (4.6).

6. Arrangement according to claim 4 or 5, characterised in that a light guide cylinder (57) is provided as a light guide on the inner surface of the drum with a spacing which allows the interposition of a storage layer (5.9).

7. Arrangement according to claim 6, characterised in that the light guide cylinder (57) is cut off at both ends in a planar manner and a mirror ring (56) is mounted in front of the entry surface (57.1) of this light guide cylinder (57), the reflecting surface (62) of said mirror ring having, in radial cross section, the form of an arc of a circle or one piece is like the arc of a circle and one piece is plane and the light guidance is favoured in the light guide cylinder (57).

8. Arrangement according to one of the claims 2 to 7, characterised in that the light guide (29 to 29.9, 57) consists of quartz and has a wall thickness of 3 to 10 mm, more particularly 5 mm.

## Revendications

1. Dispositif pour convertir des informations d'une image contenues dans une couche d'enregistrement ou mémoire (5 à 5.9) en une suite de signaux électriques, comprenant une aire située sur un tambour (4 à 4.6), à laquelle sont associés des moyens pour la fixation de la couche mémoire (5 à 5.9), et un faisceau de balayage (21 à 21.9) dirigé sur cette aire et provenant d'une source lumineuse (2, 2.6), le faisceau de balayage (21 à 21.9) et le tambour (4 à 4.6) étant agencés de façon à pouvoir être tournés et déplacés axialement l'un par rapport à l'autre, dans le sens d'un balayage de lignes et d'un passage d'une ligne à une autre, un conducteur de lumière (29 à 29.9, 57) établissant une liaison optique entre l'aire balayée et un convertisseur photoélectrique (6 à 6.9), caractérisé en ce que l'aire est située sur la paroi interne du tambour (4 à 4.6), que le faisceau de balayage (21 à 21.9) est guidé par un miroir de déviation (28 à 28.9) tournant, disposé au centre du tambour (4 à 4.6), et que le conducteur de lumière (29 à 29.9, 57) est disposé fixe en rotation et est alignée sur l'aire balayée, que décrit le faisceau de balayage (21 à 21.9) dirigé par le miroir de déviation (28 à 28.9) contre le côté intérieur du tambour (4 à 4.6).

2. Dispositif selon la revendication 1, caractérisé en ce que le conducteur de lumière est une plaque transparente (29) qui est appliquée par l'une de ses grandes faces contre la fenêtre d'entrée de rayonnement (30) du convertisseur (6), s'étend par sa tranche (29.2) jusqu'à proximité de l'aire balayée, de manière à laisser subsister seulement le jeu nécessaire au déplacement axial, et présente en son centre un évidement dans lequel est disposé le miroir de déviation (28), lequel réfléchit le faisceau de balayage en direction radiale et à travers la plaque (29) sur l'aire balayée, le miroir étant monté rotatif autour de l'axe du tambour (4).

3. Dispositif selon la revendication 1, caractérisé en ce que le conducteur de lumière est une plaque∙ (29.1, 29.4) conductrice de lumière qui s'étend en travers de l'espace intérieur du tambour (4.4), le miroir de déviation (28.1, 28.4) étant placé devant cette plaque (29.1, 29.4) et le faisceau de balayage (21.1, 21.4) étant dévié radialement et obliquement par rapport au plan de la plaque (29.1, 29.4), de manière qu'il incide sur la couche mémoire (5.1, 5.4) à proximité de la tranche (29.2) de la plaque (29.1, 29.4), après avoir frôlé le bord extérieur (29.3) de la plaque (29.1, 29.4).

4. Dispositif selon la revendication 1, caractérisé en ce que le conducteur de lumière possède la forme d'un cylindre (29.8 à 29.9, 57) qui recouvre, exception faite d'une distance autorisant le déplacement relatif, la partie, obturée, du côté intérieur du tambour (4.6) laissée libre par la couche mémoire (5.6 à 5.9) et dont un bord porte une surface-miroir (50.6 à 50.9) oblique, inclinée vers l'intérieur sur 45°, tandis que l'autre extrémité est appliquée contre la fenêtre d'entrée du rayonnement (30.6 à 30.9) du convertisseur photoélectrique (6.6 à 6.9).

5. Dispositif selon la revendication 4, caractérisé en ce que le tambour (4.6) est transparent, tout au moins sur la partie où est disposée l'aire balayée de la couche mémoire (5.6 à 5.9), et que le cylindre conducteur de lumière (29.6 à 29.9), relié au convertisseur (6.6 à 6.9), est appliqué contre la surface externe du tambour (4.6).

6. Dispositif selon la revendication 4 ou 5, caractérisé en ce qu'un conducteur de lumière sous forme d'un cylindre (57) est prévu sur la surface interne du tambour, à une distance de cette surface qui permet l'interposition d'une couche mémoire (5.9).

7. Dispositif selon la revendication 6, caractérisé en ce que le cylindre conducteur de lumière (57) est coupé plan aux deux extrémités et la surface d'entrée (57.1) est précédée d'un miroir en anneau (56) dont la surface réfléchissante (62) possède en coupe radiale la forme d'un arc de cercle ou une forme composée d'un tronçon en arc de cercle et d'un tronçon plan, qui favorise la conduction de la lumière dans le cylindre (57).

8. Dispositif selon une des revendications 2 à 7, caractérisé en ce que le conducteur de lumière (29 à 29.9, 57) est en quartz et possède une épaisseur de paroi de 3 à 10 mm, en particulier de 5 mm.

FIG 1

FIG 2

FIG 3

FIG 4

FIG 5

FIG 6

FIG 7

FIG 8

FIG 9

FIG 10

FIG 11

FIG 12

FIG 13

FIG 14

FIG 15